(19) Europäisches Patentamt
European Patent Office
Office européen des brevets

(11) **EP 4 629 386 A1**

(12) **EUROPEAN PATENT APPLICATION**

(43) Date of publication:
08.10.2025 Bulletin 2025/41

(21) Application number: 24223487.0

(22) Date of filing: 27.12.2024

(51) International Patent Classification (IPC):
*H01M 10/0567* (2010.01)    *H01M 50/417* (2021.01)
*H01M 50/451* (2021.01)    *H01M 10/0525* (2010.01)
*H01M 10/0569* (2010.01)    *H01M 4/62* (2006.01)

(52) Cooperative Patent Classification (CPC):
**H01M 10/0569; H01M 10/0525; H01M 10/0567;
H01M 50/417; H01M 50/451;** H01M 4/622;
H01M 2300/0037; H01M 2300/0068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.12.2023 CN 202311862833

(71) Applicant: **Dongguan Amperex Technology
Limited
Dongguan City, Guangdong Province 523000
(CN)**

(72) Inventors:
• **HE, Huajin
Dongguan City,
Guangdong Province 523000 (CN)**
• **XIE, Yuansen
Dongguan City,
Guangdong Province 523000 (CN)**

(74) Representative: **Icosa
83 avenue Denfert-Rochereau
75014 Paris (FR)**

(54) **ELECTROCHEMICAL APPARATUS AND ELECTRONIC APPARATUS**

(57)    An electrochemical apparatus includes a separator and an electrolyte solution, where the separator includes a base film and a first coating disposed on a surface of the base film, the first coating includes a solid-state electrolyte material, and the solid-state electrolyte material includes element Ti; the electrolyte solution includes compound I, and the compound I includes at least one of vinylene carbonate, vinyl ethylene carbonate, fluoroethylene carbonate, or 4,5-difluoro-1,3-dioxolan-2-one; and based on a mass of the electrolyte solution, a mass percentage P% of the compound I is 0.5% to 20%, and based on a mass of the first coating, a mass percentage of the element Ti is Q%, wherein $1 \leq Q/P \leq 60$.

<u>100</u>

FIG. 1

## Description

### TECHNICAL FIELD

This application relates to the field of electrochemical technologies, and in particular, to an electrochemical apparatus and an electronic apparatus.

### BACKGROUND

Electrochemical apparatuses such as lithium-ion batteries have been widely used in fields such as portable electronic products, electric vehicles, and smart grids due to their advantages such as high energy density and stable cycling performance.

Lithium-ion batteries mainly include four key materials: positive electrode plate, negative electrode plate, separator, and electrolyte solution. An interface between the negative electrode plate and the electrolyte solution has a negative-electrode solid-state electrolyte material interface film (SEI film) formed by oxidation or reduction of the electrolyte solution. The properties of the SEI film have a significant impact on the cycling performance of lithium-ion batteries.

### SUMMARY

The objective of this application is to provide an electrochemical apparatus and an electronic apparatus to improve the cycling performance of the electrochemical apparatus. Specific technical solutions are as follows.

A first aspect of this application provides an electrochemical apparatus, including a positive electrode plate, a negative electrode plate, a separator, and an electrolyte solution, wherein the separator includes a base film and a first coating disposed on a surface of the base film, a side of the separator provided with the first coating faces the negative electrode plate, the first coating includes a solid-state electrolyte material and a binder, and the solid-state electrolyte material includes element Ti; the electrolyte solution includes compound I, and the compound I includes at least one selected from the group consisting of vinylene carbonate, vinyl ethylene carbonate, fluoroethylene carbonate, and 4,5-difluoro-1,3-dioxolan-2-one; and based on a mass of the electrolyte solution, a mass percentage P% of the compound I is 0.5% to 20%, and based on a mass of the first coating, a mass percentage of the element Ti is Q%, where $1 \leq Q/P \leq 60$. The separator includes the solid-state electrolyte material, the solid-state electrolyte material includes the element Ti, the electrolyte solution includes the compound I, the values of P and Q/P are controlled within the ranges of this application, and the compound I in the electrolyte solution is reduced and polymerized on a surface of the negative electrode plate to form a polymer, which facilitates the formation of an SEI film containing the polymer on the surface of the negative electrode plate, enhances the stability of the SEI film, and reduces the interfacial reactions between a negative electrode active material and the electrolyte solution. The coating of the separator includes the solid-state electrolyte material, which is favorable for the dissociation of lithium salts in the electrolyte solution. The element Ti in the solid-state electrolyte material is reduced from tetravalence to tervalence during electrochemical cycling, catalyzing the polymerization reaction of the compound I, and improving the uniformity and degree of polymerization of the compound I. Moreover, the reduction product of the solid-state electrolyte material may coordinate with the polymerization product of the compound I (the foregoing polymer) to participate in the construction of the SEI film, enhancing the ionic conductivity (for example, lithium ion) and stability of the SEI film, thereby improving the cycling performance, high-temperature storage performance, and kinetic performance of the electrochemical apparatus.

In some embodiments of this application, based on the mass of the first coating, a mass percentage Q% of the element Ti is 10% to 30%. Controlling the value of Q within the foregoing range helps play the role of the element Ti in catalyzing the polymerization reaction of the compound I and improves the uniformity and degree of polymerization of the compound I, thereby enhancing the lithium ionic conductivity and stability of the SEI film, and improving the cycling performance, high-temperature storage performance, and kinetic performance of the electrochemical apparatus.

In some embodiments of this application, a particle size $D_v50$ of the solid-state electrolyte material is A μm, a particle size $D_v90$ of the solid-state electrolyte material is B μm, and a particle size $D_v10$ of the solid-state electrolyte material is C μm, wherein $0.05 \leq A \leq 1$, and $0.1 \leq (B-C)/A \leq 3$. Controlling the values of A and (B-C)/A within the foregoing ranges not only can play the role of the element Ti in the solid-state electrolyte material in catalyzing the polymerization reaction of the compound I, but also helps improve the wettability uniformity of the electrolyte solution with respect to the solid-state electrolyte material in the separator, increases the contact area between the electrolyte solution and the solid-state electrolyte material, and better plays the role of the solid-state electrolyte material in facilitating the dissociation of lithium salts in the electrolyte solution, thereby improving the cycling performance, high-temperature storage performance, and kinetic performance of the electrochemical apparatus.

In some embodiments of this application, $0.06 \leq B \leq 3$, and $0.02 \leq C \leq 0.9$. Controlling the values of B and C within the foregoing ranges helps control the particle size distribution of the solid-state electrolyte material within an appropriate range, which not only can play the role of the element Ti in the solid-state electrolyte material in catalyzing the polymerization reaction of the compound I, but also can further improve the wettability uniformity of the electrolyte solution with respect to the solid-state electrolyte material, increase the contact area between the electrolyte solution and the solid-state electrolyte material, and better play the role of the solid-state electrolyte material in facilitating the dissociation of lithium salts in the electrolyte solution, thereby improving the cycling performance, high-temperature storage performance, and kinetic performance of the electrochemical apparatus.

In some embodiments of this application, $0.1 \leq A \times P \leq 5$. Controlling the value of $A \times P$ within the foregoing range facilitates the synergistic effect between the solid-state electrolyte material and the compound I, further reduces the interfacial reactions between the negative electrode active material and the electrolyte solution, and improves the lithium ionic conductivity and stability of the SEI film, thereby further improving the cycling performance, high-temperature storage performance, and kinetic performance of the electrochemical apparatus.

In some embodiments of this application, the solid-state electrolyte material includes at least one of sodium superionic conductor-type lithium aluminum titanium phosphate $Li_{1+x}Al_xTi_{2-x}(PO_4)_3$ or perovskite-type lithium lanthanum titanium oxide $Li_{3y}La_{-y+2/3}TiO_3$, wherein $0.2 \leq x \leq 0.6$, and $0.1 \leq y \leq 0.3$. Selecting the solid-state electrolyte material within the foregoing range facilitates the dissociation of lithium salts in the electrolyte solution. The element Ti in the solid-state electrolyte material can catalyze the polymerization reaction of the compound I during electrochemical cycling, and improve the uniformity and degree of polymerization of the compound I. The reduction product of the solid-state electrolyte material may coordinate with the polymerization product of the compound I to participate in the construction of the SEI film, enhancing the lithium ionic conductivity and stability of the SEI film, thereby improving the cycling performance, high-temperature storage performance, and kinetic performance of the electrochemical apparatus.

In some embodiments of this application, the first coating has a thickness of 0.5 μm to 4 μm, and the base film has a thickness of 2 μm to 12 μm. Controlling the thickness of the first coating within the foregoing range facilitates the synergistic effect between the solid-state electrolyte material and the compound I, and improves the ionic conductivity at the interface between the separator and the negative electrode plate, thereby improving the cycling performance, high-temperature storage performance, and kinetic performance of the electrochemical apparatus. In addition, controlling the thickness of the base film within the foregoing range can better play the supporting role of the base film, make the separator have relatively good mechanical properties, and reduce the energy density loss of the electrochemical apparatus.

In some embodiments of this application, a mass ratio of the solid-state electrolyte material to the binder is (50 to 99):(1 to 50). Controlling the mass ratio of the solid-state electrolyte material to the binder within the foregoing range can make the interface adhesion between the first coating and the base film better, facilitate the synergistic effect between the solid-state electrolyte material and the compound I, and enhance the ionic conductivity at the interface between the separator and the negative electrode plate, thereby improving the cycling performance, high-temperature storage performance, and kinetic performance of the electrochemical apparatus.

In some embodiments of this application, the electrochemical apparatus meets at least one of the following characteristics: (1) based on a mass of the electrolyte solution, a mass percentage P% of the compound I is 1% to 10%; (2) based on a mass of the first coating, a mass percentage of the element Ti is Q%, wherein $1.5 \leq Q/P \leq 30$; (3) a particle size $D_v50$ of the solid-state electrolyte material is A μm, a particle size $D_v90$ of the solid-state electrolyte material is B μm, a particle size $D_v10$ of the solid-state electrolyte material is C μm, wherein $0.5 \leq (B-C)/A \leq 2$; (4) a mass ratio of the solid-state electrolyte material to the binder is (80 to 98):(2 to 20); or (5) the binder includes at least one selected from the group consisting of polyvinylidene fluoride, vinylidene fluoride-hexafluoropropylene copolymer, polyacrylonitrile, polyacrylic acid, polyacrylate, polyacrylate salt, styrene-acrylate copolymer, styrene-butadiene copolymer, polyamide, sodium carboxymethyl cellulose, polyvinyl acetate, polyvinylpyrrolidone, polyethylene oxide, polytetrafluoroethylene, hexafluoropropylene, and polymethyl methacrylate. The electrochemical apparatus with the foregoing characteristics has good cycling performance, high-temperature storage performance, and kinetic performance.

In some embodiments of this application, the electrolyte solution further includes a cyclic ester and a linear ester, where based on a mass of the electrolyte solution, a mass percentage D% of the cyclic ester is 10% to 70%, and a mass percentage E% of the linear ester is 20% to 80%; and the cyclic ester includes at least one selected from the group consisting of ethylene carbonate, propylene carbonate, and butylene carbonate, and the linear ester includes at least one selected from the group consisting of dimethyl carbonate, diethyl carbonate, dipropyl carbonate, methyl propyl carbonate, ethyl propyl carbonate, ethyl methyl carbonate, methylene difluoride ethyl carbonate, methylene trifluoride ethyl carbonate, ethyl trifluoroethyl carbonate, methylene hexafluoroisopropyl carbonate, bis(2,2,2-trifluoroethyl) carbonate, ethyl acetate, n-propyl acetate, t-butyl acetate, methyl propionate, ethyl propionate, propyl propionate, t-butyl methyl acetate, t-butyl ethyl acetate, acetate-2,2-difluoroethyl, acetate-2,2,2-trifluoroethyl, hexafluoroisopropyl acetate, propionate-2,2-difluoroethyl, propionate-2,2,2-trifluoroethyl, and propionate-hexafluoroisopropyl. The electrolyte solution includes the cyclic ester and linear ester within the foregoing ranges, and controlling the values of D and E within the foregoing ranges can make the electrolyte solution have lower viscosity and higher lithium ionic conductivity facilitating the migration of ions in the electrolyte solution, and can also enhance the wettability of the electrolyte solution with respect to the solid-state electrolyte material in the separator, achieving uniform and efficient catalysis of the compound I by the element Ti in the solid-state electrolyte material, enhancing the uniformity and degree of polymerization of the compound I, thereby improving the cycling performance, high-temperature storage performance, and kinetic performance of the electrochemical apparatus.

In some embodiments of this application, a particle size $D_v50$ of the solid-state electrolyte material is A $\mu$m, wherein $1.5 \leq A \times D \leq 70$. Controlling the value of $A \times D$ within the foregoing range helps to make the solid-state electrolyte material in the separator have suitable stacking morphology and stacking density, increases the wettability and wetting rate of the electrolyte solution with respect to the separator, achieves uniform and efficient catalysis of the compound I by the element Ti in the solid-state electrolyte material, and improves the uniformity and degree of polymerization of compound I, thereby improving the cycling performance, high-temperature storage performance, and kinetic performance of the electrochemical apparatus.

In some embodiments of this application, a particle size $D_v50$ of the solid-state electrolyte material is A $\mu$m, wherein $3 \leq A \times E \leq 70$. Controlling the value of $A \times E$ within the foregoing range helps to make the solid-state electrolyte material in the separator have suitable stacking morphology and stacking density, increases the wettability and wetting rate of the electrolyte solution with respect to the separator, achieves uniform and efficient catalysis of the compound I by the element Ti in the solid-state electrolyte material, and improves the uniformity and degree of polymerization of compound I, thereby improving the cycling performance, high-temperature storage performance, and kinetic performance of the electrochemical apparatus.

A second aspect of this application provides an electronic apparatus, including the electrochemical apparatus according to the first aspect of this application. The electrochemical apparatus of this application has good cycling performance, high-temperature storage performance, and kinetic performance, and thus the electronic apparatus of this application has a relatively long service life.

This application has the following beneficial effects.

This application provides an electrochemical apparatus and an electronic apparatus. The electrochemical apparatus includes a positive electrode plate, a negative electrode plate, a separator, and an electrolyte solution, where the separator includes a base film and a first coating disposed on a surface of the base film, a side of the separator provided with the first coating faces the negative electrode plate, the first coating includes a solid-state electrolyte material and a binder, and the solid-state electrolyte material includes element Ti; the electrolyte solution includes compound I, and the compound I includes at least one selected from the group consisting of vinylene carbonate, vinyl ethylene carbonate, fluoroethylene carbonate, and 4,5-difluoro-1,3-dioxolan-2-one; and based on a mass of the electrolyte solution, a mass percentage P% of the compound I is 0.5% to 20%, and based on a mass of the first coating, a mass percentage of the element Ti is Q%, wherein $1 \leq Q/P \leq 60$. The separator includes the solid-state electrolyte material, the solid-state electrolyte material includes the element Ti, the electrolyte solution includes the compound I, the values of P and Q/P are controlled within the ranges of this application, and the compound I is reduced and polymerized on a surface of the negative electrode plate, which facilitates the formation of an SEI film containing a polymer on the surface of the negative electrode plate, enhances the stability of the SEI film, and reduces the interfacial reactions between a negative electrode active material and the electrolyte solution. The element Ti in the solid-state electrolyte material is reduced from tetravalence to tervalence during electrochemical cycling, catalyzing the polymerization reaction of the compound I, and improving the uniformity and degree of polymerization of the compound I. Moreover, the reduction product of the solid-state electrolyte material may coordinate with the polymerization product of the compound I to participate in the construction of the SEI film, enhancing the lithium ionic conductivity and stability of the SEI film, thereby improving the cycling performance, high-temperature storage performance, and kinetic performance of the electrochemical apparatus.

Certainly, when any product or method of this application is implemented, all advantages described above are not necessarily demonstrated simultaneously.

**BRIEF DESCRIPTION OF DRAWINGS**

To describe technical solutions in some embodiments of this application or in the prior art more clearly, the following briefly describes the accompanying drawings required for describing some embodiments or the prior art. Apparently, the accompanying drawings in the following descriptions show only some embodiments of this application, and persons of ordinary skill in the art may still derive others embodiments from these accompanying drawings.

FIG. 1 is a schematic structural diagram of an electrochemical apparatus according to an embodiment of this application; and

FIG. 2 shows a scanning electron microscope photograph of a cross-section of a separator of Example 1-19 along a thickness direction of the separator.

**DETAILED DESCRIPTION OF EMBODIMENTS**

The following clearly and completely describes the technical solutions in some embodiments of this application with reference to the accompanying drawings in some embodiments of this application. Apparently, the described embodiments are only some rather than all of these embodiments of this application. All other embodiments obtained by persons skilled in the art based on this application shall fall within the protection scope of this application.

It should be noted that an example in which a lithium-ion battery is used as an electrochemical apparatus is used to illustrate this application below. However, the electrochemical apparatus in this application is not limited to the lithium-ion battery. Specific technical solutions are as follows.

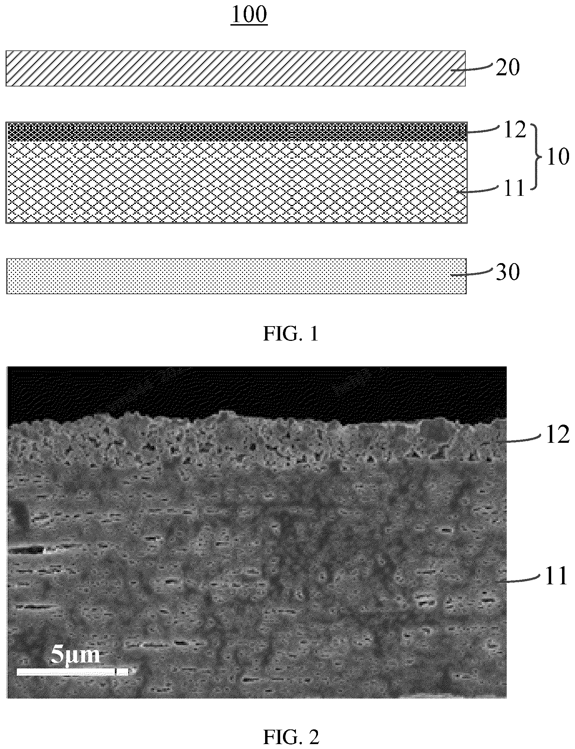

A first aspect of this application provides an electrochemical apparatus, as shown in FIG. 1. The electrochemical apparatus 100 includes a separator 10, a negative electrode plate 20, a positive electrode plate 30, and an electrolyte solution (not shown in FIG. 1). The separator 10 includes a base film 11 and a first coating 12 disposed on a surface of the base film 11, and a side of the separator 10 provided with the first coating 12 faces the negative electrode plate 20. The first coating includes a solid-state electrolyte material and a binder, where the solid-state electrolyte material includes element Ti. The electrolyte solution includes compound I, wherein the compound I includes at least one selected from the group consisting of vinylene carbonate (VC), vinyl ethylene carbonate (VEC), fluoroethylene carbonate (FEC), and 4,5-difluoro-1,3-dioxolan-2-one (DFEC); and based on a mass of the electrolyte solution, a mass percentage P% of the compound I is 0.5% to 20%, and preferably, P% is 1% to 10%. Based on a mass of the first coating, a mass percentage of the element Ti is Q%, wherein $1 \leq Q/P \leq 60$, and preferably, $1.5 \leq Q/P \leq 30$. For example, the value of P may be 0.5, 0.8, 1, 2, 3, 4, 5, 6, 8, 10, 13, 15, 18, 20, or in a range defined by any two of these values, and the value of Q/P may be 1, 1.5, 3, 5, 8, 10, 12, 15, 18, 20, 22, 25, 27, 30, 32, 35, 38, 40, 45, 50, 55, 60, or in a range defined by any two of these values.

The electrolyte solution includes the compound I, and the compound I in the electrolyte solution may be reduced and polymerized on the surface of a negative electrode plate to form a polymer, which facilitates the formation of an SEI film containing the polymer on the surface of the negative electrode plate, enhances the stability of the SEI film, and reduces the interfacial reactions between the negative electrode active material and the electrolyte solution. However, the obtained SEI film has the problem of poor thickness uniformity. A thin SEI film is not conducive to reducing the interfacial reactions between the negative electrode active material and the electrolyte solution. A thick SEI film will make the local impedance on the surface of the negative electrode plate too large, hindering ion transport. In addition, the obtained polymer has a low degree of polymerization, and a part of the polymer may dissolve in the electrolyte solution, which is not conducive to the transport of lithium ions in the electrolyte solution. For this case, introducing a solid-state electrolyte material containing the element Ti into the separator facilitates the dissociation of lithium salts in the electrolyte solution. The element Ti is reduced from tetravalence to tervalence during electrochemical cycling, catalyzing the polymerization reaction of the compound I, and improving the uniformity and degree of polymerization of the compound I. Moreover, the reduction product of the solid-state electrolyte material may coordinate with the polymerization product (the foregoing polymer) of the compound I to participate in the construction of the SEI film, enhancing the lithium ionic conductivity and stability of the SEI film, thereby improving the cycling performance, high-temperature storage performance, and kinetic performance (for example, rate performance) of the electrochemical apparatus. The inventors found that a too-large value of P causes a too-thick SEI film formed on the surface of the negative electrode plate, which is not conducive to the transport of lithium ions, affecting the cycling performance and rate performance of the electrochemical apparatus. A too-small value of P causes poor stability of the SEI film, cannot reduce the interfacial reactions between the negative electrode active material and the electrolyte solution, and is not conducive to improving the cycling performance and high-temperature storage performance of the electrochemical apparatus. A too-large value of Q/P is not conducive to facilitate the synergistic effect between the solid-state electrolyte material and the compound I, causes poor stability of the SEI film, cannot reduce the interfacial reactions between the negative electrode active material and the electrolyte solution, and also not conducive to increasing the degree of polymerization of the polymer, which hinders the transport of lithium ions in the electrolyte solution, and affects the improvement of the cycling performance, high-temperature storage performance, and kinetic performance of the electrochemical apparatus. A too-small value of Q/P cannot facilitate the synergistic effect between the solid-state electrolyte material and the compound I, causes a too-thick SEI film formed on the surface of the negative electrode plate, and makes the SEI film have poor uniformity, which is also not conducive to the transport of lithium ions, and not conducive to improving the cycling performance, high-temperature storage performance, and kinetic performance of the electrochemical apparatus. Therefore, the separator includes the solid-state electrolyte material, the solid-state electrolyte material includes the element Ti, the electrolyte solution includes the compound I, and controlling the values of P and Q/P within the ranges in this application can improve the cycling performance, high-temperature storage performance, and kinetic performance of the electrochemical apparatus. In this application, "high temperature" is a temperature greater than or equal to 45°C.

In some embodiments of this application, based on the mass of the first coating, a mass percentage Q% of the element Ti is 10% to 30%. For example, the value of Q may be 10, 12, 15, 18, 20, 21, 24, 25, 27, 30, or in a range defined by any two of these values. Controlling the value of Q within the foregoing range helps play the role of the element Ti in catalyzing the polymerization reaction of the compound I and improves the uniformity and degree of polymerization of the compound I, thereby enhancing the lithium ionic conductivity and stability of the SEI film, and improving the cycling performance, high-temperature storage performance, and kinetic performance of the electrochemical apparatus.

In some embodiments of this application, a particle size $D_v50$ of the solid-state electrolyte material is A $\mu$m, a particle size $D_v90$ of the solid-state electrolyte material is B $\mu$m, and a particle size $D_v10$ of the solid-state electrolyte material is C $\mu$m, wherein $0.05 \leq A \leq 1$, and $0.1 \leq (B-C)/A \leq 3$, and preferably $0.5 \leq (B-C)/A \leq 2$. For example, the value of A may be 0.05, 0.07, 0.1, 0.2, 0.4, 0.5, 0.6, 0.8, 0.9, 1, or in a range defined by any two of these values, and the value of (B-C)/A may be 0.1, 0.3, 0.5, 0.6, 0.8, 1, 1.2, 1.4, 1.5, 2, 2.5, 3, or in a range defined by any two of these values. Controlling the values of A and (B-C)/A within the foregoing ranges not only can play the role of the element Ti in the solid-state electrolyte material in catalyzing the polymerization reaction of the compound I, but also helps improve the wettability uniformity of the electrolyte solution with respect to the solid-state electrolyte material in the separator, increases the contact area between the electrolyte solution and the solid-state electrolyte material, and better plays the role of the solid-state electrolyte material in facilitating the dissociation of lithium salts in the electrolyte solution, thereby improving the cycling performance, high-temperature storage performance, and kinetic performance of the electrochemical apparatus. In this application, in the particle size distribution by volume of the material, starting from the small particle size, the particle size reaching 90% of the accumulated volume is $D_v90$, the particle size reaching 50% of the accumulated volume is $D_v50$, and the particle size reaching 10% of the accumulated volume is $D_v10$.

In some embodiments of this application, $0.06 \leq B \leq 3$, and $0.02 \leq C \leq 0.9$. For example, the value of B may be 0.06, 0.07, 0.1, 0.3, 0.5, 0.6, 0.8, 0.9, 1, 1.5, 2, 2.5, 3, or in a range defined by any two of these values, and the value of C may be 0.02, 0.05, 0.07, 0.08, 0.1, 0.2, 0.3, 0.5, 0.6, 0.8, 0.9, or in a range defined by any two of these values. Controlling the values of B and C within the foregoing ranges helps control the particle size distribution of the solid-state electrolyte material within an appropriate range, which not only can play the role of the element Ti in the solid-state electrolyte material in catalyzing the polymerization reaction of the compound I, but also can further improve the wettability uniformity of the electrolyte solution with respect to the solid-state electrolyte material, increase the contact area between the electrolyte solution and the solid-state electrolyte material, and better play the role of the solid-state electrolyte material in facilitating the dissociation of lithium salts in the electrolyte solution, thereby improving the cycling performance, high-temperature storage performance, and kinetic performance of the electrochemical apparatus.

In some embodiments of this application, $0.1 \leq A \times P \leq 5$. For example, $A \times P$ may be 0.1, 0.5, 0.6, 0.8, 1, 1.5, 2, 2.5, 3, 3.5, 4, 4.5, 5, or in a range defined by any two of these values. Controlling the value of $A \times P$ within the foregoing range facilitates the synergistic effect between the solid-state electrolyte material and the compound I, further reduces the interfacial reactions between the negative electrode active material and the electrolyte solution, and improves the lithium ionic conductivity and stability of the SEI film, thereby further improving the cycling performance, high-temperature storage performance, and kinetic performance of the electrochemical apparatus.

In some embodiments of this application, the solid-state electrolyte material includes at least one of sodium superionic conductor-type lithium aluminum titanium phosphate $Li_{1+x}Al_xTi_{2-x}(PO_4)_3$ or perovskite-type lithium lanthanum titanium oxide $Li_{3y}La_{-y+2/3}TiO_3$, where $0.2 \leq x \leq 0.6$, and $0.1 \leq y \leq 0.3$. For example, the value of x may be 0.2, 0.3, 0.4, 0.5, 0.6, or in a range defined by any two of these values, and the value of y may be 0.1, 0.15, 0.2, 0.25, 0.3, or in a range defined by any two of these values. For example, the solid-state electrolyte material may include at least one selected from the group consisting of $Li_{1.3}Al_{0.3}Ti_{1.7}(PO_4)_3$, $Li_{1.6}Al_{0.6}Ti_{1.4}(PO_4)_3$, $Li_{0.5}La_{0.5}TiO_3$, and $Li_{0.9}La_{0.37}TiO_3$. Selecting the solid-state electrolyte material within the foregoing range facilitates the dissociation of lithium salts in the electrolyte solution. The element Ti in the solid-state electrolyte material can catalyze the polymerization reaction of the compound I during electrochemical cycling, and improve the uniformity and degree of polymerization of the compound I. The reduction product of the solid-state electrolyte material may coordinate with the polymerization product of the compound I to participate in the construction of the SEI film, enhancing the lithium ionic conductivity and stability of the SEI film, thereby improving the cycling performance, high-temperature storage performance, and kinetic performance of the electrochemical apparatus.

In some embodiments of this application, the first coating has a thickness of 0.5 $\mu$m to 4 $\mu$m, and the base film has a thickness of 2 $\mu$m to 12 $\mu$m. For example, the thickness of the first coating may be 0.5 $\mu$m, 0.6 $\mu$m, 0.8 $\mu$m, 1 $\mu$m, 1.5 $\mu$m, 2 $\mu$m, 2.5 $\mu$m, 3 $\mu$m, 3.5 $\mu$m, 4 $\mu$m, or in a range defined by any two of these values, and the thickness of the base film may be 2 $\mu$m, 4 $\mu$m, 5 $\mu$m, 6 $\mu$m, 7 $\mu$m, 8 $\mu$m, 9 $\mu$m, 10 $\mu$m, 12 $\mu$m, or in a range defined by any two of these values. Controlling the thickness of the first coating within the foregoing range facilitates the synergistic effect between the solid-state electrolyte material and the compound I, and improves the ionic conductivity at the interface between the separator and the negative electrode plate, thereby improving the cycling performance, high-temperature storage performance, and kinetic performance of the electrochemical apparatus. In addition, controlling the thickness of the base film within the foregoing range can better play the supporting role of the base film, make the separator have relatively good mechanical properties, and reduce the energy density loss of the electrochemical apparatus.

In some embodiments of this application, a mass ratio of the solid-state electrolyte material to the binder is (50 to 99):(1 to 50), and preferably (80 to 98):(2 to 20). For example, the mass ratio of the solid-state electrolyte material to the binder may be 50:50, 60:40, 70:30, 80:20, 90:10, 95:5, 98:2, 99:1, or in a range defined by any two of these values. Controlling the mass ratio of the solid-state electrolyte material to the binder within the foregoing range can make the interface adhesion between the first coating and the base film better, facilitate the synergistic effect between the solid-state electrolyte material and the compound I, and enhance the ionic conductivity at the interface between the separator and the negative electrode plate, thereby improving the cycling performance, high-temperature storage performance, and kinetic performance of the electrochemical apparatus.

In some embodiments of this application, the binder includes at least one selected from the group consisting of polyvinylidene fluoride (PVDF), vinylidene fluoride-hexafluoropropylene copolymer, polyacrylonitrile (PAN), polyacrylic acid, polyacrylate, polyacrylate salt, styrene-acrylate copolymer, styrene-butadiene copolymer, polyamide, sodium carboxymethyl cellulose, polyvinyl acetate, polyvinylpyrrolidone, polyethylene oxide, polytetrafluoroethylene, hexafluoropropylene, and polymethyl methacrylate (PMMA). The binders within the foregoing range can make the interface between the first coating and the base film and the adhesion effect between the solid-state electrolyte material particles better, so that the solid-state electrolyte material is evenly distributed in the first coating, which facilitates the synergistic effect between the solid-state electrolyte material and the compound I, and enhances the ionic conductivity at the interface between the separator and the negative electrode plate, thereby improving the cycling performance, high-temperature storage performance, and kinetic performance of the electrochemical apparatus.

In some embodiments of this application, the electrolyte solution further includes a cyclic ester and a linear ester, wherein based on a mass of the electrolyte solution, a mass percentage D% of the cyclic ester is 10% to 70%, and a mass percentage E% of the linear ester is 20% to 80%. For example, the value of D may be 10, 15, 20, 22, 25, 28, 30, 32, 35, 38, 40, 45, 50, 55, 60, 65, 70, or in a range defined by any two of these values, and the value of E may be 20, 25, 30, 35, 38, 40, 42, 45, 48, 50, 52, 55, 58, 60, 62, 65, 70, 75, 80, or in a range defined by any two of these values. The cyclic ester includes at least one selected from the group consisting of ethylene carbonate (EC), propylene carbonate (PC), and butylene carbonate (BuC), and the linear ester includes at least one selected from the group consisting of dimethyl carbonate (DMC), diethyl carbonate (DEC), dipropyl carbonate (DPC), methyl propyl carbonate (MPC), ethyl propyl carbonate (EPC), ethyl methyl carbonate (EMC), methylene difluoride ethyl carbonate, methylene trifluoride ethyl carbonate, ethyl trifluoroethyl carbonate, methylene hexafluoroisopropyl carbonate, bis(2,2,2-trifluoroethyl) carbonate, ethyl acetate, n-propyl acetate, t-butyl acetate, methyl propionate, ethyl propionate, propyl propionate, t-butyl methyl acetate, t-butyl ethyl acetate, acetate-2,2-difluoroethyl, acetate-2,2,2-trifluoroethyl, hexafluoroisopropyl acetate, propionate-2,2-difluoroethyl, propionate-2,2,2-trifluoroethyl, and propionate-hexafluoroisopropyl. The electrolyte solution includes the cyclic ester and linear ester within the foregoing ranges, and controlling the values of D and E within the foregoing ranges can make the electrolyte solution have lower viscosity and higher lithium ionic conductivity, facilitating the migration of ions in the electrolyte solution, and can also enhance the wettability of the electrolyte solution with respect to the solid-state electrolyte material in the separator, achieving uniform and efficient catalysis of the compound I by the element Ti in the solid-state electrolyte material, enhancing the uniformity and degree of polymerization of the compound I, thereby improving the cycling performance, high-temperature storage performance, and kinetic performance of the electrochemical apparatus. In some embodiments, the electrolyte solution includes two or more cyclic esters as mentioned above. This application does not particularly limit the proportions of different cyclic esters, provided that the objectives of this application can be achieved. In some embodiments, the electrolyte solution includes two or more linear esters as mentioned above. This application does not particularly limit the proportions of different linear esters, provided that the objectives of this application can be achieved.

In some embodiments of this application, a particle size $D_v50$ of the solid-state electrolyte material is A $\mu m$, wherein $1.5 \leq A \times D \leq 70$. For example, the value of $A \times D$ may be 1.5, 2, 5, 8, 10, 15, 20, 23, 25, 28, 30, 32, 35, 38, 40, 45, 50, 55, 60, 70, or in a range defined by any two of these values. Controlling the value of $A \times D$ within the foregoing range helps to make the solid-state electrolyte material in the separator have suitable stacking morphology and the first coating have suitable density, increases the wettability and wetting rate of the electrolyte solution with respect to the separator, achieves uniform and efficient catalysis of the compound I by the element Ti in the solid-state electrolyte material, and improves the uniformity and degree of polymerization of compound I, thereby improving the cycling performance, high-temperature storage performance, and kinetic performance of the electrochemical apparatus.

In some embodiments of this application, a particle size $D_v50$ of the solid-state electrolyte material is A $\mu m$, wherein $3 \leq A \times E \leq 70$. For example, the value of $A \times E$ may be 3, 5, 8, 10, 15, 18, 20, 22, 25, 28, 30, 32, 35, 40, 45, 50, 55, 60, 65, 68, 70, or in a range defined by any two of these values. Controlling the value of $A \times E$ within the foregoing range helps to make the solid-state electrolyte material in the separator have suitable stacking morphology and stacking density, increases the wettability and wetting rate of the electrolyte solution with respect to the separator, achieves uniform and efficient catalysis of the compound I by the element Ti in the solid-state electrolyte material, and improves the uniformity and degree of polymerization of compound I, thereby improving the cycling performance, high-temperature storage performance, and kinetic performance of the electrochemical apparatus.

This application does not particularly limit the preparation method of the separator provided that the objectives of this application can be achieved. The separator may be prepared using common multilayer film preparation methods in the field, for example, using a common PE film or PP film as a base film, and preparing a first coating on a surface of the base film through methods such as cold pressing, hot pressing, blade coating, spin coating, or electrospinning to obtain the separator of this application. The preparation method of the separator may include the following steps: dissolving the solid-state electrolyte material and the binder in a solvent, stirring the mixture into uniformity to obtain a first coating slurry, applying the first coating slurry on a surface of the base film using a blade, and then drying the base film covered with the slurry to obtain the separator. This application does not particularly limit the solvent mentioned above. For example, the solvent may include but is not limited to N-methyl pyrrolidone, and the solid content of the first coating slurry may be 5wt% to 50wt%.

Generally, selecting solid-state electrolyte materials with different percentages of the element Ti or changing the mass ratio of the solid-state electrolyte material to the binder may adjust the mass percentage Q% of the element Ti. Selecting a solid-state electrolyte material with a high percentage of the element Ti increases Q; and selecting a solid-state electrolyte material with a low percentage of the element Ti decreases Q. Increasing the mass ratio of the solid-state electrolyte material to the binder increases Q; and decreasing the mass ratio of the solid-state electrolyte material to the binder decreases Q.

The separator of this application may further include a second coating, where the second coating is disposed on at least one surface of the base film. On a side of the separator facing the negative electrode plate, the second coating and the first coating are sequentially disposed on the surface of the base film, with the second coating located between the first coating and the base film. The second coating includes inorganic particles and a binder. This application does not particularly limit the mass ratio of the inorganic particles to the binder provided that the objectives of this application can be achieved. This application does not particularly limit the type of the inorganic particles provided that the objectives of this application can be achieved. For example, the inorganic particles may include but are not limited to at least one of one or more of aluminum oxide, silicon oxide, magnesium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder may be the same as or different from the binder in the first coating mentioned above, and this application does not particularly limit thereto.

The electrolyte solution of this application may further include a lithium salt. This application does not particularly limit the type of lithium salt provided that the objectives of this application can be achieved. For example, the lithium salt may include but is not limited to at least one of lithium hexafluorophosphate ($LiPF_6$), lithium tetrafluoroborate ($LiBF_4$), lithium difluorophosphate ($LiPO_2F_2$), lithium bis(trifluoromethanesulfonyl)imide ($LiN(SO_2CF_3)_2$, LiTFSI), lithium bis(fluorosulfonyl)imide (LiFSI), lithium bis(oxalatoborate) (LiBOB), lithium difluorooxalatoborate (LiDFOB), lithium perchlorate ($LiClO_4$), lithium tetraphenylborate ($LiB(C_6H_5)_4$), lithium methanesulfonate ($LiCH_3SO_3$), lithium trifluoromethanesulfonate ($LiCF_3SO_3$), tris(trifluoromethylsulfonyl)methyl lithium ($LiC(SO_2CF_3)_3$), or lithium hexafluorosilicate ($Li_2SiF_6$). Based on a mass of the electrolyte solution, a mass percentage of the lithium salt may be 8% to 30%. For example, the mass percentage of the lithium salt may be 8%, 9%, 10%, 11%, 12.5%, 13%, 15%, 17.5%, 20%, 22%, 25%, 28%, 30%, or in a range defined by any two of these values.

This application does not particularly limit the positive electrode plate provided that the objectives of this application can be achieved. For example, the positive electrode plate includes a positive electrode current collector and a positive electrode material layer disposed on at least one surface of the positive electrode current collector. This application does not particularly limit the positive electrode current collector provided that the objectives of this application can be achieved. For example, the positive electrode current collector may include aluminum foil, aluminum alloy foil, a composite current collector (for example, aluminum-carbon composite current collector), or the like. This application does not particularly limit the thickness of the positive electrode current collector provided that the objectives of this application can be achieved. For example, the thickness of the positive electrode current collector is 5 μm to 20 μm. In this application, the positive electrode material layer includes a positive electrode active material. This application does not particularly limit the type of the positive electrode active material provided that the objective of this application can be achieved. The positive electrode active material includes a compound that can reversibly intercalate and deintercalate lithium ions. In some embodiments, the positive electrode material layer includes a positive electrode active material with an operating potential above 4.5 V relative to lithium metal. In other words, the positive electrode active material of this application can operate under high voltage. In some embodiments, the positive electrode active material may include at least one of lithium nickel cobalt manganese oxide (NCM), lithium nickel cobalt aluminum oxide, lithium iron phosphate, lithium-rich manganese-based material, lithium cobalt oxide, lithium manganese oxide, or lithium manganese iron phosphate. This application does not particularly limit the type of NCM provided that the objectives of this application can be achieved. For example, the NCM may include at least one of NCM811, NCM622, NCM523, or NCM111. The positive electrode active material may have been doped. In some embodiments, an element for doping may include at least one of K, Na, Ca, Mg, B, Al, Co, Si, V, Ga, Sn, or Zr. This application does not particularly limit the thickness of the positive electrode material layer provided that the objectives of this application can be achieved. For example, the thickness of the positive electrode material layer is 30 μm to 120 μm. In this application, the positive electrode material layer may be disposed on one surface of the positive electrode current collector in a thickness direction of the positive electrode current collector, or may be disposed on two surfaces of the positive electrode current collector in a thickness direction of the positive electrode current collector. It should be noted that the "surface" herein may be an entire region of the surface of the positive electrode current collector or may be a partial region of the surface of the positive electrode current collector. This application does not particularly limit thereto provided that the objectives of this application can be achieved. The positive electrode material layer of this application may further include a positive electrode conductive agent and a positive electrode binder. This application does not particularly limit the positive electrode conductive agent and the positive electrode binder, provided that the objectives of this application can be achieved. For example, the positive electrode conductive agent may include but is not limited to at least one of conductive carbon black (Super P), carbon nanotubes (CNTs), carbon fibers, graphene, a metal material, or a conductive polymer. The carbon nanotubes may include but are not limited to single-walled carbon nanotubes and/or multi-walled carbon nanotubes. The carbon fibers may include but are not limited to vapor grown carbon fibers (VGCF) and/or carbon nanofibers. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. The positive electrode binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, polypropylene acid, styrene-butadiene rubber, acrylic styrene-butadiene rubber, epoxy resin, or nylon.

This application does not particularly limit the negative electrode plate provided that the objectives of this application can be achieved. The negative electrode plate includes a negative electrode current collector and a negative electrode material layer disposed on at least one surface of the negative electrode current collector. This application does not particularly limit the negative electrode current collector provided that the objectives of this application can be achieved. For example, the negative electrode current collector may include copper foil, copper alloy foil, nickel foil, stainless steel foil, titanium foil, foamed nickel, foamed copper, a composite current collector (for example, carbon-copper composite current collector, nickel-copper composite current collector, or titanium-copper composite current collector), or the like. This application does not particularly limit the thickness of the negative electrode current collector provided that the objectives of this application can be achieved. For example, the thickness of the negative electrode current collector is 4 $\mu$m to 20 $\mu$m. In this application, the negative electrode material layer includes a negative electrode active material. This application does not particularly limit the negative electrode active material provided that the objectives of this application can be achieved. The negative electrode active material includes a material that can reversibly intercalate and deintercalate lithium ions. In some embodiments, the material that can reversibly intercalate and deintercalate lithium ions includes at least one of lithium metal, lithium alloy, a carbon material, or a silicon-based material. In some embodiments, the lithium alloy may include at least one of Li-Ag, Li-Al, Li-B, Li-Mg, Li-Au, Li-Na, Li-Si, Li-Sn, Li-Zn, Li-Ba, Li-Bi, Li-C, Li-Ca, Li-Ge, Li-Cs, Li-Ga, Li-K, Li-Pb, Li-P, Li-Sb, LiB-Mg, or Li-Mg-Si. The carbon material includes at least one of crystalline carbon or amorphous carbon. The silicon-based material includes at least one of silicon, a silicon-oxide compound (SiO$_k$, 0<k≤2), a silicon-carbon compound, or silicon alloy. This application does not particularly limit the thickness of the negative electrode material layer provided that the objectives of this application can be achieved. For example, the thickness of the single-sided negative electrode material layer is 30 $\mu$m to 130 $\mu$m. In this application, the negative electrode material layer may be disposed on one surface of the negative electrode current collector in a thickness direction of the negative electrode current collector, or may be disposed on two surfaces of the negative electrode current collector in a thickness direction of the negative electrode current collector. It should be noted that the "surface" herein may be an entire region of the negative electrode current collector, or may be a partial region of the negative electrode current collector. This application does not particularly limit thereto provided that the objectives of this application can be achieved. The negative electrode material layer of this application may further include a negative electrode conductive agent and a negative electrode binder. This application does not particularly limit the negative electrode conductive agent and the negative electrode binder provided that the objectives of this application can be achieved. For example, the negative electrode conductive agent may be the same as the positive electrode conductive agent mentioned above, and the negative electrode binder may be the same as the positive electrode binder mentioned above.

The electrochemical apparatus of this application further includes a packaging bag, which is configured to accommodate the positive electrode plate, the separator, the negative electrode plate, and the electrolyte solution, as well as other components known in the field of electrochemical apparatuses. This application does not limit these other components. The packaging bag is not particularly limited in this application and may be any well-known packaging bag in the art, provided that the objectives of this application can be achieved.

The electrochemical apparatus in this application is not particularly limited, and may include any apparatus in which an electrochemical reaction occurs. In an embodiment of this application, the electrochemical apparatus may include but is not limited to a lithium-ion secondary battery (lithium-ion battery), a lithium metal secondary battery (lithium metal battery), a sodium-ion secondary battery (sodium-ion battery), a sodium metal secondary battery (sodium metal battery), a lithium polymer secondary battery, or a lithium-ion polymer secondary battery. This application does not particularly limit the shape of the electrochemical apparatus provided that the objectives of this application can be achieved. For example, the electrochemical apparatus may include but is not limited to a columnar battery, a prismatic battery, a specially shaped battery, or a button battery.

A preparation process of the electrochemical apparatus of this application is well known to persons skilled in the art, and is not particularly limited in this application. For example, the preparation process may include but is not limited to the following steps: a positive electrode plate, a separator, and a negative electrode plate are stacked in sequence and go through operations such as winding and folding as needed to obtain an electrode assembly with a winding structure, the electrode assembly is put into a packaging bag, and the packaging bag is injected with an electrolyte solution and sealed to obtain an electrochemical apparatus; or a positive electrode plate, a separator, and a negative electrode plate are stacked in sequence, four corners of the entire laminated structure are fixed with tapes to obtain an electrode assembly with a laminated structure, the electrode assembly is put into a packaging bag, and the packaging bag is injected with an electrolyte solution and sealed to obtain an electrochemical apparatus. In addition, an overcurrent prevention element, a guide plate, and the like may also be placed into the packaging bag as needed, so as to prevent pressure increase, overcharge, and overdischarge inside the electrochemical apparatus.

A second aspect of this application provides an electronic apparatus, including the electrochemical apparatus according to the first aspect of this application. The electrochemical apparatus of this application has good cycling performance, high-temperature storage performance, and kinetic performance, and thus the electronic apparatus of this application has a relatively long service life. The electronic apparatus of this application is not particularly limited, and may be any electronic apparatus known in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

## Examples

The following describes some embodiments of this application more specifically using examples and comparative examples. Various tests and evaluations are performed in the following methods. In addition, unless otherwise specified, "part" and "%" are based on weight.

### Test method and device:

### Test for percentages of components in electrolyte solution:

The lithium-ion battery discharged to 3.0 V at a constant current of 0.5C was disassembled, the electrolyte solution was collected, the disassembled positive electrode plate, negative electrode plate, and separator were centrifuged, and the centrifuged liquid was mixed with the electrolyte solution to obtain a liquid sample. The liquid sample was tested using ion chromatography (IC) to determine the percentages of lithium salts in the electrolyte solution. The liquid sample was tested using gas chromatography-mass spectrometry (GC-MS) to determine the mass ratio of various components in the electrolyte solution, and the mass percentages of these components in the electrolyte solution were calculated in combination with the foregoing determined percentages of the lithium salts.

### Test for percentages of components in separator:

The lithium-ion battery discharged to 3.0 V at a constant current of 0.5C was disassembled, and the separator was taken out and soaked in dimethyl carbonate (DMC) for 20 minutes, and then rinsed twice with DMC. Next, the separator was placed in an oven for drying to obtain the disassembled separator. The first coating was separated from the substrate layer using a blade, the mass of the first coating was weighed and recorded as $m_1$. After that, the first coating was calcined in a muffle furnace at 500°C to obtain the solid-state electrolyte material, and the mass of the solid-state electrolyte material was weighed and record as $m_2$. Then, elemental analysis was performed using inductively coupled plasma-atomic emission spectroscopy to determine the percentage of the element Ti. Finally, the mass percentage Q% of the element Ti was calculated based on the mass of the first coating, and the mass ratio of the solid-state electrolyte material to the binder was $m_2:(m_1-m_2)$.

**Particle size test:**

The steps of the foregoing component percentage test were used to take the separator out, and the separator was washed, dried, peeled, and calcined to obtain the solid-state electrolyte material. Then, the particle size distribution of the solid-state electrolyte material was tested using a Malvern particle size analyzer (model Master Sizer 2000). The sample preparation method was as follows: Approximately 0.02 g of solid-state electrolyte material sample was added to a clean 50 ml beaker, in which approximately 20 ml of deionized water was added and then 3 drops of sodium dodecyl sulfate surfactant was added, making the solid-state electrolyte material be evenly dispersed in the water, and the mixture was ultrasonicated for 5 minutes in a 120W ultrasonic cleaner to obtain the particle size test sample. In the particle size distribution by volume of the material, starting from the small particle size, the particle size reaching 90% of the accumulated volume was Dv90, the particle size reaching 50% of the accumulated volume was Dv50, and the particle size reaching 10% of the accumulated volume was Dv10.

**Scanning electron microscope test:**

The steps of the foregoing component percentage test was used to take the separator out, and the separator was washed, dried, cut, and polished to obtain the scanning electron microscope test sample. A cross-sectional morphology of the separator was observed along the thickness direction using a Philips XL-30 field emission scanning electron microscope and a scanning electron microscope photograph was taken. The thickness $H_1$ of the first coating and the thickness $H_2$ of the base film were measured using the scanning electron microscope.

**Cycling performance test:**

At an ambient temperature of 25°C, the prepared lithium-ion battery (with a theoretical capacity of 2000 mAh) was charged at a constant current of 0.5C to a voltage of 4.45 V, then charged at a constant voltage of 4.45 V until the current reached 0.05C. The charging capacity at this point was recorded as the first-cycle charging capacity of the lithium-ion battery. Next, the lithium-ion battery was left standing for 5 min, discharged at a constant current of 0.5C to a voltage of 3.0 V, and left standing for 5 min. This constituted one charge-discharge cycle. The discharge capacity at this point was recorded as the first-cycle discharge capacity of the lithium-ion battery, that is, the initial capacity of the lithium-ion battery. The lithium-ion battery was tested according to the foregoing method for 500 charge and discharge cycles, and the discharge capacity of the 500-th cycle was recorded. Capacity retention rate at 25°C (%) = discharge capacity of the 500-th cycle / discharge capacity of the first cycle × 100%

**High-temperature storage performance test:**

At an ambient temperature of 25°C, the prepared lithium-ion battery (with a theoretical capacity of 2000 mAh) was charged at a constant current of 0.5C to 4.45 V, then charged at a constant voltage of 4.45 V until the current reached 0.05C. The thickness of the lithium-ion battery at this point was recorded as the initial thickness. The lithium-ion battery was stored in a constant temperature chamber at 60°C for 30 days. During this period, the thickness of the lithium-ion battery was tested and recorded once every 6 days. The thickness measured after 30 days was recorded as the storage thickness. A thickness swelling rate of the lithium-ion battery was calculated as an indicator to evaluate high-temperature storage performance of the lithium-ion battery. Storage swelling rate at 60°C (%) = (storage thickness - initial thickness) / initial thickness × 100%.

**Rate performance test:**

At an ambient temperature of 25°C, the prepared lithium-ion battery (with a theoretical capacity of 2000 mAh) was charged at a constant current of 0.5C to 4.45 V, charged at a constant voltage of 4.45 V until the current reached 0.05C, left standing for 5 min, and then discharged at a constant current of 0.5C to 3 V The discharge capacity at 0.5C was recorded. Next, the lithium-ion battery was left standing for 5 min, charged again at a constant current of 0.5C to 4.45 V, and then charged at a constant voltage of 4.45 V until the current reached 0.05C; after that, left standing for 5 min, and then discharged at a constant current of 3C to 3 V. The discharge capacity at 3C was recorded. Discharge capacity retention rate at 3C (%) = (discharge capacity at 3C / discharge capacity at 0.5C) × 100%.

**Example 1-1**

<Preparation of separator>

A solid-state electrolyte material $Li_{1.3}Al_{0.3}Ti_{1.7}(PO_4)_3$ and a binder PVDF were mixed in a mass ratio of 80:20, in which N-methyl pyrrolidone (NMP) was added as a solvent to prepare a first coating slurry with a solid content of 12wt%. The mixture was stirred evenly, and the first coating slurry was evenly applied on one surface of a polyethylene-based film with a thickness of $H_2$=5 $\mu$m. After drying, a separator with a first coating having a thickness of $H_1$=2 $\mu$m coated on one side was obtained. Particle sizes $D_v50$, $D_v90$, and $D_v10$ of the solid-state electrolyte material were A=0.31 $\mu$m, B=0.45 $\mu$m, and C=0.2 $\mu$m, respectively.

<Preparation of electrolyte solution>

In a glove box with an argon atmosphere and water content less than 10 ppm, cyclic esters ethylene carbonate (EC) and propylene carbonate (PC) and a linear ester diethyl carbonate (DEC) were mixed at a mass ratio of 1:1:3.7 to prepare a base solvent. Next, a lithium salt $LiPF_6$ and a compound I vinylene carbonate (VC) were added to the base solvent in sequence, and the mixture was stirred into uniformity to obtain an electrolyte solution. Based on a mass of the electrolyte solution, a mass percentage of the lithium salt was 12.5%, a mass percentage D% of the cyclic esters was 30%, a mass percentage E% of the linear ester was 55.5%, and a mass percentage P% of the compound I was 2%.

<Preparation of positive electrode plate>

A positive electrode active material $LiCoO_2$, a conductive agent conductive carbon black (Super P), and a binder polyvinylidene fluoride (PVDF) were mixed at a mass ratio of 97:1.4:1.6, in which NMP was added, and the mixture was stirred into uniformity to prepare a positive electrode slurry with a solid content of 72wt%. The positive electrode slurry was evenly applied on one surface of a positive electrode current collector aluminum foil with a thickness of 9 $\mu$m, and the aluminum foil was dried at 85°C for 4 h to obtain a positive electrode plate with a single-sided positive electrode material layer coated with a coating thickness of 60 $\mu$m. The foregoing steps were repeated on the other surface of the aluminum foil to obtain a positive electrode plate with two surfaces coated with the positive electrode material layer. Then the positive electrode plate was dried under vacuum conditions at 85°C for 4 h, followed by cold pressing, cutting, and slitting to obtain positive electrode plates with dimensions of 74 mm×867 mm.

<Preparation of negative electrode plate>

A negative electrode active material graphite, a conductive agent Super P, a thickener sodium carboxymethyl cellulose, and a binder styrene-butadiene rubber (SBR) were mixed in a mass ratio of 96.4:1.5:0.5:1.6, in which deionized water was added, and the mixture was stirred to prepare a negative electrode slurry with solid content of 54wt%. The negative electrode slurry was evenly applied on one surface of a negative electrode current collector copper foil with a thickness of 10 $\mu$m, and the copper foil was dried at 85°C for 4 h to obtain a negative electrode plate with a single-sided negative electrode material layer coated with a coating thickness of 75 $\mu$m. The foregoing steps were repeated on the other surface of the copper foil to obtain a negative electrode plate with two surfaces coated with the negative electrode material layer. Then the negative electrode plate was dried under vacuum conditions at 85°C for 4 h, followed by cold pressing, cutting, and slitting to obtain negative electrode plates with dimensions of 78 mm×875 mm.

<Preparation of lithium-ion battery>

The prepared positive electrode plate, separator, and negative electrode plate were stacked in sequence, with a side of the separator coated with the first coating facing the negative electrode plate, so that the separator was sandwiched between the positive electrode plate and the negative electrode plate for isolation, and the stacked product was made into an electrode assembly through winding. The electrode assembly welded with tabs was put into an aluminum-plastic film packaging bag for dehydrating at 85°C in a vacuum drying chamber for 12 h, the packaging bag was injected with the electrolyte solution prepared above, followed by processes such as vacuum packaging, standing, formation (charged at a constant current of 0.02C to 3.5 V, and then charged at a constant current of 0.1C to 3.9 V), shaping, capacity testing, and secondary packaging, and a pouch lithium-ion battery of 3.3 mm×39 mm×96 mm was obtained.

**Examples 1-2 to 1-9**

Except for adjusting the mass percentage of the compound I according to Table 1, with the mass percentage of the base solvent changing accordingly, while maintaining the proportions of various substances in the base solvent and the mass percentage of the lithium salt unchanged, all other parameters were the same as those of Example 1-1.

**Examples 1-10 to 1-28**

Except for adjusting the parameters according to Table 1, all other parameters were the same as those of Example 1-1.

**Examples 2-1 to 2-6**

Except for adjusting the parameters according to Table 2, all other parameters were the same as those of Example 1-1.

**Examples 2-7 to 2-9**

Except for adjusting the mass percentage of the cyclic esters (EC+PC) according to Table 2, with the mass percentage of the linear ester changing accordingly, while maintaining the mass ratio of EC to PC at 1:1 and the mass percentages of the compound I and the lithium salt unchanged, all other parameters were the same as those of Example 2-4.

**Example 2-10**

Except for replacing PC with butylene carbonate (BuC), all other parameters were the same as those of Example 1-1.

**Example 2-11**

Except for replacing DEC with ethyl propyl carbonate (EPC), all other parameters were the same as those of Example 1-1.

**Example 2-12**

Except for adjusting the parameters according to Table 2, all other parameters were the same as those of Example 1-1.

**Example 2-13**

Except for adjusting the mass percentage of the cyclic esters (EC+PC) according to Table 2, with the mass percentage of the linear ester changing accordingly, while maintaining the mass ratio of EC to PC at 1:1 and the mass percentages of the compound I and the lithium salt unchanged, all other parameters were the same as those of Example 2-4.

**Comparative Example 1**

Except for preparing the separator according to the following <Preparation of separator> and not adding the compound I during <Preparation of electrolyte solution>, with the mass percentage of the base solvent changing accordingly while maintaining the proportions of various substances in the base solvent and the mass percentage of the lithium salt unchanged, all other parameters were the same as those of Example 1-1.

<Preparation of separator>

A ceramic particles $Al_2O_3$ and a binder PVDF were mixed at a mass ratio of 80:20, in which N-methyl pyrrolidone (NMP) as the solvent was added to prepare a first coating slurry with a solid content of 12wt%, and the mixture was stirred into uniformity. The first coating slurry was evenly applied on one surface of a polyethylene base film with a thickness of $H_2$=5 $\mu$m. After drying, a separator with a first coating having a thickness of $H_1$=2 $\mu$m coated on one side was obtained. Particle sizes $D_v50$, $D_v90$, and $D_v10$ of the ceramic particles $Al_2O_3$ were A=0.34 $\mu$m, B=0.5 $\mu$m, and C=0.25 $\mu$m, respectively.

**Comparative Example 2**

Except for adjusting the mass percentage of the compound I during <Preparation of electrolyte solution> according to Table 2, with the mass percentage of the base solvent changing accordingly, while maintaining the proportions of various substances in the base solvent and the mass percentage of the lithium salt unchanged, all other parameters were the same as those of Comparative Example 1.

**Comparative Example 3**

Except for not adding the compound I during <Preparation of electrolyte solution>, with the mass percentage of the base solvent changing accordingly while maintaining the proportions of various substances in the base solvent and the mass percentage of the lithium salt unchanged, all other parameters were the same as those of Example 1-1.

**Comparative Examples 4 to 7**

Except for adjusting the parameters according to Table 1, all other parameters were the same as those of Example 1-1.

The relevant parameters and performance test results of the examples and comparative examples are shown in Table 1 and Table 2 below.

**Table 1**

| | Compound I | P (%) | Solid-state electrolyte material | x or y | Q (%) | Q/P | $H_1$ ($\mu$m) | $H_2$ ($\mu$m) | Mass ratio of solid-state electrolyte material to binder | Binder | Capacity retention rate at 25°C (%) | Storage swelling rate at 60°C (%) | Discharge capacity retention rate at 3C (%) |
|---|---|---|---|---|---|---|---|---|---|---|---|---|---|
| Example 1-1 | VC | 2 | $Li_{1.3}Al_{0.3}Ti_{1.7}(PO_4)_3$ | x=0.3 | 17.0 | 8.5 | 2 | 5 | 80:20 | PVDF | 78.1 | 28 | 79.2 |
| Example 1-2 | VC | 0.5 | $Li_{1.3}Al_{0.3}Ti_{1.7}(PO_4)_3$ | x=0.3 | 17.0 | 34 | 2 | 5 | 80:20 | PVDF | 74.3 | 32 | 79.0 |
| Example 1-3 | VC | 1 | $Li_{1.3}Al_{0.3}Ti_{1.7}(PO_4)_3$ | x=0.3 | 17.0 | 17 | 2 | 5 | 80:20 | PVDF | 76.9 | 29 | 80.2 |
| Example 1-4 | VC | 3 | $Li_{1.3}Al_{0.3}Ti_{1.7}(PO_4)_3$ | x=0.3 | 17.0 | 5.7 | 2 | 5 | 80:20 | PVDF | 77.6 | 27 | 77.3 |
| Example 1-5 | VC | 5 | $Li_{1.3}Al_{0.3}Ti_{1.7}(PO_4)_3$ | x=0.3 | 17.0 | 3.4 | 2 | 5 | 80:20 | PVDF | 77.0 | 25 | 76.3 |
| Example 1-6 | VC | 8 | $Li_{1.3}Al_{0.3}Ti_{1.7}(PO_4)_3$ | x=0.3 | 17.0 | 2.1 | 2 | 5 | 80:20 | PVDF | 76.7 | 26 | 76.1 |
| Example 1-7 | VC | 10 | $Li_{1.3}Al_{0.3}Ti_{1.7}(PO_4)_3$ | x=0.3 | 17.0 | 1.7 | 2 | 5 | 80:20 | PVDF | 76.5 | 27 | 75.5 |
| Example 1-8 | VC | 15 | $Li_{1.3}Al_{0.3}Ti_{1.7}(PO_4)_3$ | x=0.3 | 17.0 | 1.13 | 2 | 5 | 80:20 | PVDF | 75.1 | 29 | 74.3 |
| Example 1-9 | VC | 20 | $Li_{1.3}Al_{0.3}Ti_{1.7}(PO_4)_3$ | x=0.3 | 17.0 | 0.85 | 2 | 5 | 80:20 | PVDF | 74.5 | 33 | 72.2 |
| Example 1-10 | VEC | 2 | $Li_{1.3}Al_{0.3}Ti_{1.7}(PO_4)_3$ | x=0.3 | 17.0 | 8.5 | 2 | 5 | 80:20 | PVDF | 80.2 | 25 | 78.5 |
| Example 1-11 | FEC | 2 | $Li_{1.3}Al_{0.3}Ti_{1.7}(PO_4)_3$ | x=0.3 | 17.0 | 8.5 | 2 | 5 | 80:20 | PVDF | 82.5 | 24 | 80.5 |
| Example 1-12 | DFEC | 2 | $Li_{1.3}Al_{0.3}Ti_{1.7}(PO_4)_3$ | x=0.3 | 17.0 | 8.5 | 2 | 5 | 80:20 | PVDF | 83.7 | 22 | 82.0 |
| Example 1-13 | VC | 2 | $Li_{1.6}Al_{0.6}Ti_{1.4}(PO_4)_3$ | x=0.6 | 14.1 | 7 | 2 | 5 | 80:20 | PVDF | 76.7 | 29 | 75.2 |
| Example 1-14 | VC | 2 | $Li_{0.5}La_{0.5}TiO_3$ | y=1/6 | 22.7 | 11.35 | 2 | 5 | 80:20 | PVDF | 80.1 | 27 | 78.2 |
| Example 1-15 | VC | 2 | $Li_{0.9}La_{0.37}TiO_3$ | y=0.3 | 24.9 | 12.45 | 2 | 5 | 80:20 | PVDF | 77.3 | 31 | 74.3 |
| Example 1-16 | VC | 2 | $Li_{1.3}Al_{0.3}Ti_{1.7}(PO_4)_3$ | x=0.3 | 17.0 | 8.5 | 0.4 | 5 | 80:20 | PVDF | 76.3 | 31 | 78.3 |
| Example 1-17 | VC | 2 | $Li_{1.3}Al_{0.3}Ti_{1.7}(PO_4)_3$ | x=0.3 | 17.0 | 8.5 | 4 | 5 | 80:20 | PVDF | 77.2 | 28 | 77.2 |
| Example 1-18 | VC | 2 | $Li_{1.3}Al_{0.3}Ti_{1.7}(PO_4)_3$ | x=0.3 | 17.0 | 8.5 | 2 | 2 | 80:20 | PVDF | 79.5 | 25 | 80.3 |

(continued)

| | Compound I | P (%) | Solid-state electrolyte material | x or y | Q (%) | Q/P | $H_1$ (μm) | $H_2$ (μm) | Mass ratio of solid-state electrolyte material to binder | Binder | Capacity retention rate at 25°C (%) | Storage swelling rate at 60°C (%) | Discharge capacity retention rate at 3C (%) |
|---|---|---|---|---|---|---|---|---|---|---|---|---|---|
| Example 1-19 | VC | 2 | $Li_{1.3}Al_{0.3}Ti_{1.7}(PO_4)_3$ | x=0.3 | 17.0 | 8.5 | 2 | 10 | 80:20 | PVDF | 77.6 | 29 | 78.5 |
| Example 1-20 | VC | 2 | $Li_{1.3}Al_{0.3}Ti_{1.7}(PO_4)_3$ | x=0.3 | 17.0 | 8.5 | 2 | 12 | 80:20 | PVDF | 76.3 | 31 | 77.1 |
| Example 1-21 | VC | 2 | $Li_{1.3}Al_{0.3}Ti_{1.7}(PO_4)_3$ | x=0.3 | 10.6 | 5.3 | 2 | 5 | 50:50 | PVDF | 75.2 | 32 | 73.4 |
| Example 1-22 | VC | 2 | $Li_{1.3}Al_{0.3}Ti_{1.7}(PO_4)_3$ | x=0.3 | 19.1 | 9.55 | 2 | 5 | 90:10 | PVDF | 79.2 | 25 | 81.0 |
| Example 1-23 | VC | 2 | $Li_{1.3}Al_{0.3}Ti_{1.7}(PO_4)_3$ | x=0.3 | 20.8 | 10.4 | 2 | 5 | 98:2 | PVDF | 77.3 | 26 | 77.5 |
| Example 1-24 | VC | 2 | $Li_{1.3}Al_{0.3}Ti_{1.7}(PO_4)_3$ | x=0.3 | 21 | 10.5 | 2 | 5 | 99:1 | PVDF | 75.3 | 33 | 74.3 |
| Example 1-25 | VC | 2 | $Li_{1.3}Al_{0.3}Ti_{1.7}(PO_4)_3$ | x=0.3 | 17.0 | 8.5 | 2 | 5 | 80:20 | PAN | 78.3 | 27 | 80.1 |
| Example 1-26 | VC | 2 | $Li_{1.3}Al_{0.3}Ti_{1.7}(PO_4)_3$ | x=0.3 | 17.0 | 8.5 | 2 | 5 | 80:20 | PMMA | 80.3 | 26 | 81.1 |
| Example 1-27 | VC | 0.5 | $Li_{0.9}La_{0.37}TiO_3$ | y=0.3 | 29.6 | 59.2 | 2 | 5 | 95:5 | PVDF | 73.6 | 34 | 78.5 |
| Example 1-28 | VC | 1 | $Li_{0.9}La_{0.37}TiO_3$ | y=0.3 | 29.6 | 29.6 | 2 | 5 | 95:5 | PVDF | 76.6 | 32 | 76.3 |
| Comparative Example 1 | / | / | / | / | / | / | 2 | 5 | / | PVDF | 60.1 | 62 | 66.2 |
| Comparative Example 2 | VC | 2 | / | / | / | / | 2 | 5 | / | / | 72.3 | 45 | 64.2 |
| Comparative Example 3 | / | / | $Li_{1.3}Al_{0.3}Ti_{1.7}(PO_4)_3$ | x=0.3 | 17.0 | / | 2 | 5 | 80:20 | PVDF | 67.8 | 52 | 71.3 |

(continued)

| | Compound I | P (%) | Solid-state electrolyte material | x or y | Q (%) | Q/P | $H_1$ (μm) | $H_2$ (μm) | Mass ratio of solid-state electrolyte material to binder | Binder | Capacity retention rate at 25°C (%) | Storage swelling rate at 60°C (%) | Discharge capacity retention rate at 3C (%) |
|---|---|---|---|---|---|---|---|---|---|---|---|---|---|
| Comparative Example 4 | VC | 0.1 | $Li_{1.3}Al_{0.3}Ti_{1.7}(PO_4)_3$ | x=0.3 | 17.0 | 170 | 2 | 5 | 80:20 | PVDF | 69.3 | 48 | 70.2 |
| Comparative Example 5 | VC | 25 | $Li_{1.3}Al_{0.3}Ti_{1.7}(PO_4)_3$ | x=0.3 | 17.0 | 0.68 | 2 | 5 | 80:20 | PVDF | 72.1 | 38 | 64.3 |
| Comparative Example 6 | VC | 20 | $Li_{1.3}Al_{0.3}Ti_{1.7}(PO_4)_3$ | x=0.3 | 10.6 | 0.53 | 2 | 5 | 50:50 | PVDF | 72.8 | 38 | 65.2 |
| Comparative Example 7 | VC | 0.3 | $Li_{0.9}La_{0.37}TiO_3$ | y=0.3 | 29.6 | 98.7 | 2 | 5 | 95:5 | PVDF | 72.1 | 45 | 68.2 |

Note: "/" in Table 1 indicates the absence of relevant substances or parameters.

It can be learned from Examples 1-1 to 1-28 and Comparative Examples 1 to 7 that the separator includes the solid-state electrolyte material, the solid-state electrolyte material includes the element Ti, the electrolyte solution includes the compound I, and controlling the values of P and Q/P within the ranges in this application can enable the lithium-ion battery to have higher capacity retention rate at 25°C and discharge capacity retention rate at 3C and lower storage swelling rate at 60°C. This indicates that the lithium-ion batteries have better cycling performance, high-temperature storage performance, and rate performance. However, in the lithium-ion battery of Comparative Example 1, the solid-state electrolyte material in the separator is replaced with ceramic particles $Al_2O_3$, and no compound I is added in the electrolyte solution. In the lithium-ion battery of Comparative Example 2, the solid-state electrolyte material in the separator is replaced with ceramic particles $Al_2O_3$. In the lithium-ion battery of Comparative Example 3, no compound I is added in the electrolyte solution. In the lithium-ion batteries of Comparative Examples 4 to 9, at least one of the values of P and Q/P is out of the range of this application. The lithium-ion batteries in Comparative Examples 1 to 7 have lower capacity retention rate at 25°C and discharge capacity retention rate at 3C and higher storage swelling rate at 60°C. This indicates that the lithium-ion batteries have poor cycling performance, high-temperature storage performance, and rate performance.

The value of P generally affects the cycling performance, high-temperature storage performance, and rate performance of the lithium-ion battery. It can be learned from Examples 1-1 to 1-9 and Comparative Examples 4 and 5 that when P is too small, for example, in Comparative Example 4, the lithium-ion battery has lower capacity retention rate at 25°C and discharge capacity retention rate at 3C and higher storage swelling rate at 60°C; and when P is too large, for example, in Comparative Example 5, the lithium-ion batteries have lower capacity retention rate at 25°C and discharge capacity retention rate at 3C and higher storage swelling rate at 60°C. When P meets $0.5 \leq P \leq 20$, the lithium-ion batteries have higher capacity retention rate at 25°C and discharge capacity retention rate at 3C and lower storage swelling rate at 60°C. This indicates that the lithium-ion batteries have better cycling performance, high-temperature storage performance, and rate performance.

The value of Q/P generally affects the cycling performance, high-temperature storage performance, and rate performance of the lithium-ion battery. It can be learned from Examples 1-1 to 1-9, Examples 1-13 to 1-15, Examples 1-27 and 1-28, and Comparative Examples 6 and 7 that when Q/P is too small, for example, in Comparative Example 6, the lithium-ion battery has lower capacity retention rate at 25°C and discharge capacity retention rate at 3C and higher storage swelling rate at 60°C; and when Q/P is too large, for example, in Comparative Example 7, the lithium-ion battery has lower capacity retention rate at 25°C and discharge capacity retention rate at 3C and higher storage swelling rate at 60°C. When Q/P meets $1 \leq Q/P \leq 60$, the lithium-ion battery has higher capacity retention rate at 25°C and discharge capacity retention rate at 3C and lower storage swelling rate at 60°C. This indicates that the lithium-ion batteries have better cycling performance, high-temperature storage performance, and rate performance.

The value of Q generally affects the cycling performance, high-temperature storage performance, and rate performance of the lithium-ion battery. It can be learned from Example 1-1, Examples 1-13 to 1-15, Examples 1-21 to 1-24, and Examples 1-27 and 1-28 that the lithium-ion batteries with Q value within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

The type of the compound I generally affects the cycling performance, high-temperature storage performance, and rate performance of the lithium-ion battery. It can be learned from Example 1-1 and Examples 1-10 to 1-12 that the lithium-ion batteries using the compound I within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

The type of the solid-state electrolyte material generally affects the cycling performance, high-temperature storage performance, and rate performance of the lithium-ion battery. It can be learned from Example 1-1 and Examples 1-13 to 1-15 that the lithium-ion batteries using the solid-state electrolyte material within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

The thickness $H_1$ of the first coating generally affects the cycling performance, high-temperature storage performance, and rate performance of the lithium-ion battery. It can be learned from Example 1-1 and Examples 1-16 and 1-17 that the lithium-ion batteries with $H_1$ within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

The thickness $H_2$ of the base film generally affects the cycling performance, high-temperature storage performance, and rate performance of the lithium-ion battery. It can be learned from Example 1-1 and Examples 1-18 to 1-20 that the lithium-ion batteries with $H_2$ within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

The mass ratio of the solid-state electrolyte material to the binder generally affects the cycling performance, high-temperature storage performance, and rate performance of the lithium-ion battery. It can be learned from Example 1-1 and Examples 1-21 to 1-24 that the lithium-ion batteries with the mass ratio of the solid-state electrolyte material to the binder within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

The type of the binder generally affects the cycling performance, high-temperature storage performance, and rate performance of the lithium-ion battery. It can be learned from Example 1-1 and Examples 1-25 and 1-26 that the lithium-ion batteries using the binder within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

**Table 2**

| | A (μm) | B (μm) | C (μm) | (B-C)/A | P (%) | A×P | Cyclic ester | D (%) | A×D | Linear ester | E (%) | A×E | Capacity retention rate (%) | Storage swelling rate at 60°C (%) | Discharge capacity retention rate at 3C (%) |
|---|---|---|---|---|---|---|---|---|---|---|---|---|---|---|---|
| Example 1-1 | 0.31 | 0.45 | 0.20 | 0.81 | 2 | 0.62 | EC+PC | 30 | 9.3 | DEC | 55.5 | 17.2 | 78.1 | 28 | 79.2 |
| Example 1-2 | 0.31 | 0.45 | 0.20 | 0.81 | 0.5 | 0.016 | EC+PC | 30.5 | 9.5 | DEC | 56.5 | 17.5 | 74.3 | 32 | 79.0 |
| Example 1-3 | 0.31 | 0.45 | 0.20 | 0.81 | 1 | 0.31 | EC+PC | 30.3 | 9.4 | DEC | 56.2 | 17.4 | 76.9 | 29 | 80.2 |
| Example 1-4 | 0.31 | 0.45 | 0.20 | 0.81 | 3 | 0.93 | EC+PC | 29.6 | 9.2 | DEC | 54.9 | 17.0 | 77.6 | 27 | 77.3 |
| Example 1-5 | 0.31 | 0.45 | 0.20 | 0.81 | 5 | 1.55 | EC+PC | 28.9 | 9.0 | DEC | 53.6 | 16.6 | 77.0 | 25 | 76.3 |
| Example 1-6 | 0.31 | 0.45 | 0.20 | 0.81 | 8 | 2.48 | EC+PC | 27.9 | 8.6 | DEC | 51.6 | 16.0 | 76.7 | 26 | 76.1 |
| Example 1-7 | 0.31 | 0.45 | 0.20 | 0.81 | 10 | 3.12 | EC+PC | 27.2 | 8.4 | DEC | 50.3 | 15.6 | 76.5 | 27 | 75.5 |
| Example 1-8 | 0.31 | 0.45 | 0.20 | 0.81 | 15 | 4.65 | EC+PC | 25.4 | 7.9 | DEC | 47.1 | 14.6 | 75.1 | 29 | 74.3 |
| Example 1-9 | 0.31 | 0.45 | 0.20 | 0.81 | 20 | 6.2 | EC+PC | 23.7 | 7.3 | DEC | 43.8 | 13.6 | 74.5 | 33 | 72.2 |
| Example 2-1 | 0.05 | 0.07 | 0.02 | 1 | 2 | 0.10 | EC+PC | 30 | 1.5 | DEC | 55.5 | 2.78 | 76.7 | 29 | 77.3 |
| Example 2-2 | 0.10 | 0.25 | 0.05 | 2 | 2 | 0.2 | EC+PC | 30 | 3 | DEC | 55.5 | 5.6 | 78.2 | 28 | 80.2 |
| Example 2-3 | 0.50 | 0.71 | 0.38 | 0.66 | 2 | 1 | EC+PC | 30 | 15 | DEC | 55.5 | 27.8 | 77.4 | 31 | 78.1 |
| Example 2-4 | 1.00 | 1.30 | 0.80 | 0.5 | 2 | 2 | EC+PC | 30 | 30 | DEC | 55.5 | 55.5 | 76.3 | 32 | 75.2 |
| Example 2-5 | 0.90 | 0.96 | 0.87 | 0.1 | 2 | 1.8 | EC+PC | 30 | 27 | DEC | 55.5 | 50 | 75.2 | 34 | 74.3 |
| Example 2-6 | 0.80 | 3.00 | 0.60 | 3 | 2 | 1.6 | EC+PC | 30 | 24 | DEC | 55.5 | 44.4 | 75.8 | 32 | 74.8 |
| Example 2-7 | 1.00 | 1.30 | 0.80 | 0.5 | 2 | 2 | EC+PC | 50 | 50 | DEC | 35.5 | 35.5 | 75.2 | 33 | 74.2 |
| Example 2-8 | 1.00 | 1.30 | 0.80 | 0.5 | 2 | 2 | EC+PC | 70 | 70 | DEC | 15.5 | 15.5 | 74.8 | 34 | 73.1 |
| Example 2-9 | 1.00 | 1.30 | 0.80 | 0.5 | 2 | 2 | EC+PC | 5.5 | 5.5 | DEC | 80 | 80 | 75.1 | 35 | 74.2 |
| Example 2-10 | 0.31 | 0.45 | 0.20 | 0.81 | 2 | 0.62 | EC+BuC | 30 | 9.3 | DEC | 55.5 | 17.2 | 77.2 | 29 | 75.2 |
| Example 2-11 | 0.31 | 0.45 | 0.20 | 0.81 | 2 | 0.62 | EC+PC | 30 | 9.3 | EPC | 55.5 | 17.2 | 76.2 | 31 | 75.5 |
| Example 2-12 | 0.05 | 0.06 | 0.02 | 0.80 | 2 | 0.1 | EC+PC | 30 | 1.5 | DEC | 55.5 | 2.78 | 77.1 | 28 | 78.1 |
| Example 2-13 | 1.00 | 1.30 | 0.80 | 0.5 | 2 | 2 | EC+PC | 15.5 | 15.5 | DEC | 70 | 70 | 75.6 | 34 | 74.6 |

The values A, B, and C of the particle sizes $D_v50$, $D_v90$, $D_v10$ of the solid-state electrolyte material and the value (B-C)/A generally affect the cycling performance, high-temperature storage performance, and rate performance of the lithium-ion battery. It can be learned from Example 1-1, Examples 2-1 to 2-6, and Example 2-12 that, by controlling the values A, B, C, and (B-C)/A within the ranges of this application, the lithium-ion batteries have higher capacity retention rate at 25°C and discharge capacity retention rate at 3C and lower storage swelling rate at 60°C. This indicates that the lithium-ion batteries have good cycling performance, high-temperature storage performance, and rate performance.

The value of A×P affects the cycling performance, high-temperature storage performance, and rate performance of the lithium-ion battery. It can be learned from Examples 1-1 to 1-9 and Examples 2-1 to 2-6 that, by controlling the value A×P within the range of this application, the lithium-ion batteries have higher capacity retention rate at 25°C and discharge capacity retention rate at 3C and lower storage swelling rate at 60°C. This indicates that the lithium-ion batteries have good cycling performance, high-temperature storage performance, and rate performance.

The values D and E of the mass percentages of the cyclic ester and linear ester, as well as the values of A×D and A×E, generally affect the cycling performance, high-temperature storage performance, and rate performance of the lithium-ion battery. It can be learned from Examples 1-1 to 1-9, Examples 2-7 to 2-9, and Example 2-13 that, by controlling the values D, E, A×D and A×E within the ranges of this application, the lithium-ion batteries have higher capacity retention rate at 25°C and discharge capacity retention rate at 3C and lower storage swelling rate at 60°C. This indicates that the lithium-ion batteries have good cycling performance, high-temperature storage performance, and rate performance.

The type of the cyclic ester often affects the cycling performance, high-temperature storage performance, and rate performance of the lithium-ion battery. It can be learned from Example 1-1 and Example 2-10 that the lithium-ion batteries using the cyclic ester within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

The type of the linear ester often affects the cycling performance, high-temperature storage performance, and rate performance of the lithium-ion battery. It can be learned from Example 1-1 and Example 2-11 that the lithium-ion batteries using the linear ester within the range of this application have higher capacity retention rate at 25°C and discharge capacity retention rate at 3C and lower storage swelling rate at 60°C. This indicates that the lithium-ion batteries have good cycling performance, high-temperature storage performance, and rate performance.

FIG. 2 shows a scanning electron microscope photograph of a cross-section of the separator of Example 1-19 along a thickness direction of the separator. As shown in FIG. 2, the separator has two layers, including a base film 11 and a first coating 12 disposed on a surface of the base film. Both the base film 11 and the first coating 12 are porous structures with relatively uniform pore distribution, and the bonding interface between the base film 11 and the first coating 12 is relatively tight.

It should be noted that in this specification, relational terms such as first and second are only used to distinguish one entity or operation from another, and do not necessarily require or imply that any actual relationship or sequence exists between these entities or operations. In addition, the terms "include", "comprise", or any of their variants are intended to cover a non-exclusive inclusion, such that a process, method, or article that includes a series of elements includes not only those elements but also other elements that are not expressly listed, or further includes elements inherent to such process, method, or article.

Some embodiments in this specification are described in a related manner. For a part that is the same or similar between different embodiments, reference may be made between some embodiments. Each embodiment focuses on differences from other embodiments.

The foregoing descriptions are merely preferred embodiments of this application, and are not intended to limit this application. Any modifications, equivalent replacements, improvements, and the like made without departing from the spirit and principle of this application shall fall within the protection scope of this application.

**Claims**

1. An electrochemical apparatus, comprising a positive electrode plate, a negative electrode plate, a separator, and an electrolyte solution, **characterized in that**, the separator comprises a base film and a first coating disposed on a surface of the base film, wherein first coating comprises a solid-state electrolyte material and a binder; wherein the solid-state electrolyte material comprises element Ti;

   the electrolyte solution comprises compound I, wherein the compound I comprises at least one selected from the group consisting of vinylene carbonate, vinyl ethylene carbonate, fluoroethylene carbonate, and 4,5-difluoro-1,3-dioxolan-2-one; and based on a mass of the electrolyte solution, a mass percentage of the compound I is P%, P ranges from 0.5 to 20; and
   based on a mass of the first coating, a mass percentage of the element Ti is Q%, wherein $1 \leq Q/P \leq 60$.

2. The electrochemical apparatus according to claim 1, **characterized in that**, Q ranges from 10% to 30%.

3. The electrochemical apparatus according to claim 1 or 2, **characterized in that**,

$$1.5 \leq Q/P \leq 30.$$

4. The electrochemical apparatus according to any one of claims 1 to 3, **characterized in that**, a particle size $D_v50$ of the solid-state electrolyte material is A $\mu$m, a particle size $D_v90$ of the solid-state electrolyte material is B $\mu$m, and a particle size $D_v10$ of the solid-state electrolyte material is C $\mu$m, wherein $0.05 \leq A \leq 1$, and $0.1 < (B-C)/A \leq 3$.

5. The electrochemical apparatus according to claim 4, **characterized in that**, $0.06 \leq B \leq 3$, and $0.02 \leq C \leq 0.9$.

6. The electrochemical apparatus according to claim 4 or 5, **characterized in that**,

$$0.5 \leq (B-C)/A \leq 2.$$

7. The electrochemical apparatus according to any one of claims 4 to 6, **characterized in that**, $0.1 \leq A \times P \leq 5$.

8. The electrochemical apparatus according to any one of claims 1 to 7, **characterized in that**, the solid-state electrolyte material comprises at least one of sodium superionic conductor-type lithium aluminum titanium phosphate $Li_{1+x}Al_xTi_{2-x}(PO_4)_3$ or perovskite-type lithium lanthanum titanium oxide $Li_{3y}La_{-y+2/3}TiO_3$, wherein $0.2 \leq x \leq 0.6$, and $0.1 \leq y \leq 0.3$.

9. The electrochemical apparatus according to any one of claims 1 to 8, **characterized in that**, a thickness of the first coating is 0.5 $\mu$m to 4 $\mu$m, and a thickness of the base film is 2 $\mu$m to 12 $\mu$m.

10. The electrochemical apparatus according to any one of claims 1 to 9, **characterized in that**, a mass ratio of the solid-state electrolyte material to the binder is (50 to 99):(1 to 50).

11. The electrochemical apparatus according to claim 10, **characterized in that**, the binder comprises at least one selected from the group consisting of polyvinylidene fluoride, vinylidene fluoride-hexafluoropropylene copolymer, polyacrylonitrile, polyacrylic acid, polyacrylate, polyacrylate salt, styrene-acrylate copolymer, styrene-butadiene copolymer, polyamide, sodium carboxymethyl cellulose, polyvinyl acetate, polyvinylpyrrolidone, polyethylene oxide, polytetrafluoroethylene, hexafluoropropylene, and polymethyl methacrylate.

12. The electrochemical apparatus according to any one of claims 1 to 11, **characterized in that**, the electrolyte solution further comprises a cyclic ester and a linear ester, wherein based on a mass of the electrolyte solution, a mass percentage D% of the cyclic ester is 10% to 70%, and a mass percentage E% of the linear ester is 20% to 80%; and the cyclic ester comprises at least one selected from the group consisting of ethylene carbonate, propylene carbonate, and butylene carbonate, and the linear ester comprises at least one selected from the group consisting of dimethyl carbonate, diethyl carbonate, dipropyl carbonate, methyl propyl carbonate, ethyl propyl carbonate, ethyl methyl carbonate, methylene difluoride ethyl carbonate, methylene trifluoride ethyl carbonate, ethyl trifluoroethyl carbonate, methylene hexafluoroisopropyl carbonate, bis(2,2,2-trifluoroethyl) carbonate, ethyl acetate, n-propyl acetate, t-butyl acetate, methyl propionate, ethyl propionate, propyl propionate, t-butyl methyl acetate, t-butyl ethyl acetate, acetate-2,2-difluoroethyl, acetate-2,2,2-trifluoroethyl, hexafluoroisopropyl acetate, propionate-2,2-difluoroethyl, propionate-2,2,2-trifluoroethyl, and propionate-hexafluoroisopropyl.

13. The electrochemical apparatus according to claim 12, **characterized in that**, a particle size $D_v50$ of the solid-state electrolyte material is A $\mu$m, wherein $1.5 \leq A \times D \leq 70$.

14. The electrochemical apparatus according to claim 12, **characterized in that**, a particle size $D_v50$ of the solid-state electrolyte material is A $\mu$m, wherein $3 \leq A \times E \leq 70$.

15. An electronic apparatus, comprising the electrochemical apparatus according to any one of claims 1 to 14.

<u>100</u>

FIG. 1

FIG. 2

Europäisches
Patentamt

European
Patent Office

Office européen
des brevets

# EUROPEAN SEARCH REPORT

**Application Number**

EP 24 22 3487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 361 711 A (BEIJING YILAN NEW ENERGY SCIENCE AND TECH CO LTD) 15 April 2022 (2022-04-15) * examples 1,11,17,18 * * paragraph [0049] - paragraph [0056] * * paragraph [0075] - paragraph [0076] * * paragraph [0087] - paragraph [0088] * | 1-15 | INV. H01M10/0567 H01M50/417 H01M50/451 H01M10/0525 H01M10/0569 ADD. H01M4/62 |
| A | CN 114 156 602 A (LIYANG TEMMOKU LEAD BATTERY MATERIAL SCIENCE AND TECH LIMITED COMPANY) 8 March 2022 (2022-03-08) * examples 1-7 * | 1-15 | |
| A | CN 117 012 957 A (SHENZHEN BTR NEW ENERGY TECH RESEARCH INSTITUTE CO LTD) 7 November 2023 (2023-11-07) * examples 1-10 * | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 28 August 2025 | Pipoli, Tiziana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 4 629 386 A1**

## ANNEX TO THE EUROPEAN SEARCH REPORT
## ON EUROPEAN PATENT APPLICATION NO.

EP 24 22 3487

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2025

| Patent document cited in search report | | Publication date | Patent family member(s) | | Publication date |
|---|---|---|---|---|---|
| CN 114361711 | A | 15-04-2022 | CN 114361711 A | | 15-04-2022 |
| | | | CN 118763358 A | | 11-10-2024 |
| CN 114156602 | A | 08-03-2022 | NONE | | |
| CN 117012957 | A | 07-11-2023 | NONE | | |

EPO FORM P0459

For more details about this annex : see Official Journal of the European Patent Office, No. 12/82

25